# FASCICULE DE BREVET EUROPEEN

(11) **EP 2 823 341 B1**
(45) Date de publication et mention de la délivrance du brevet: **18.05.2016**
(21) Numéro de dépôt: 13707686.5
(22) Date de dépôt: 07.03.2013
(51) Int. Cl.: G02B 1/04, B29D 11/00, G02C 7/02

(54) **PROCEDE DE REALISATION DE LENTILLES POLARISANTES, ET LA LENTILLE POLARISANTE OBTENUE PAR LEDIT PROCEDE**
VERFAHREN ZUR HERSTELLUNG POLARISIERENDER LINSEN UND DURCH DIESES VERFAHREN HERGESTELLTE POLARISIERENDE LINSE
METHOD FOR PRODUCING POLARIZING LENSES, AND POLARIZING LENS OBTAINED BY SAID METHOD

(30) Priorité: 08.03.2012 FR 1200708
(43) Date de publication de la demande: 14.01.2015
(73) Titulaire: BNL Eurolens, 01200 Bellegarde sur Valserine (FR)
(72) Inventeur: CLERC, Didier, F-01200 Eloise (FR); MARTINS, Sébastien, F-01100 Apremont (FR); LEDIEN, Franck, F-01130 Echallon (FR)
(74) Mandataire: Croonenbroek, Thomas Jakob
(86) Numéro de dépôt international: PCT/EP2013/054663
(87) Numéro de publication internationale: WO 2013/132034

(56) Documents cités:
- EP-A2- 1 193 044
- EP-A2- 1 804 088
- US-A1- 2002 044 352

## Description

La présente invention concerne un procédé de réalisation de lentilles polarisantes, et la lentille polarisante obtenue par ledit procédé. Plus particulièrement, les lentilles polarisantes obtenues par le procédé de l'invention sont utilisables sur une monture pour former une paire de lunettes comme une paire de lunettes solaires correctrices ou non correctrices, de type masque ou traditionnelles, ou une paire de lunettes de protection correctrices ou non correctrices.

Le procédé de l'invention est particulièrement adapté pour la réalisation de lentilles non correctrices. Par lentille non-correctrice, on entend une lentille sans puissance astigmatique ni sphérique, telles que celles concernées par les normes relatives aux lunettes solaires ou aux lunettes de protection, comme la norme EN 1836. Les lunettes dont les lentilles incorporent un filtre polarisant sont très répandues et sont par exemple utilisées dans toutes les activités réalisées dans des endroits, comme la mer ou les étendues neigeuses, comportant des zones de fortes réflexions de la lumière. Ces fortes réflexions peuvent en effet gêner la vision et dans certains cas constituer des sources d'éblouissement. De telles lunettes ont également un fort intérêt pour la conduite de véhicules, car elles permettent de limiter voire d'éliminer la perception des réflexions parasites sur les parebrises, et par exemple les pare-brise d'automobiles.

Pour ces lunettes, sont utilisées des lentilles polarisantes comportant un filtre polarisant généralement réalisé sous la forme d'un film de polymère d'alcool polyvinylique (ou PVA). De tels films polarisants sont obtenus classiquement en incorporant des molécules de colorants dichroïques et/ou des cristaux d'iode dichroïques dans un film à base d'alcool polyvinylique, puis en étirant le film uniaxialement de façon à orienter les molécules de colorants dichroïques et/ou les cristaux d'iode dichroïques selon la direction d'étirement. On entend, par colorant dichroïque, une espèce pouvant être de nature moléculaire ou cristalline et présentant une absorption privilégiée du rayonnement électromagnétique visible pour une orientation spatiale particulière. Les films polarisants ainsi obtenus sont peu onéreux et possèdent une qualité optique qui est compatible avec de nombreuses applications, notamment des applications ophtalmiques.

Le film de PVA est ensuite recouvert d'une ou plusieurs couches de matériau protecteur pour former la lentille.

Ainsi, on connaît des films composés de TAC - PVA - TAC, (le TAC étant du tri-acétate de cellulose) sur lequel on vient injecter du polyamide sur la face arrière destinée à être en vis-à-vis de l'oeil.

Toutefois, il s'avère que le film TAC - PVA - TAC se décolle avec le temps, ce qui n'est pas admissible.

Un but de l'invention est de fournir une structure alternative aux structures connues, qui présente une bonne durabilité et qui soit réalisable au moins en partie par injection. Ainsi le procédé de l'invention est dédié à la réalisation de lentille polarisante thermoplastique.

A cet effet, on prévoit, selon l'invention, une lentille polarisante comportant, successivement, une couche de support mécanique comprenant du polyamide formant une face arrière de la lentille, une couche intermédiaire d'alcool polyvinylique, et une couche externe en triacétate de cellulose formant une face avant de la lentille.

Ainsi, le polyamide apporte une résistance mécanique tandis que le triacétate de cellulose apporte une résistance aux interactions chimiques. En utilisation sur une monture de lunettes, la couche externe est orientée à l'opposé du visage du porteur. Les propriétés du triacétate de cellulose et du polyamide se combinent alors de telle manière que ces matériaux se protègent mutuellement d'au moins une partie des agressions extérieures.

De plus, par rapport par exemple au polycarbonate, le polyamide est plus compatible avec des montures en acétate de cellulose. En effet, lorsque du polycarbonate est en contact avec de l'acétate de cellulose, la formation de microfissures a été constaté, pouvant même aller jusqu'à la cassure de l'oculaire en polycarbonate. En effet, l'acétate de cellulose contient des plastifiants qui ont tendance à migrer dans le polycarbonate. Avec le polyamide, cet effet de migration et de formation de microfissures n'a pas été constaté.

Par ailleurs, le polyamide présente aussi une meilleure tenue lors et après par exemple des opérations de perçage, lors de l'adaptation à une monture.

De telles lentilles ainsi que leur procédé de fabrication présentent également un avantage notable par rapport aux lentilles de l'état de l'art. En effet, les lentilles polarisantes à base de polyamide sont réalisées notamment par l'utilisation d'un film polarisant comprenant une couche avant de polyamide biréfringent, un film d'alcool polyvinylique, et une couche arrière de polyamide étiré, cette dernière étant amené à fusionner avec le polyamide représentant le matériau constitutif de la lentille lors de la mise en oeuvre du procédé d'injection. On comprendra aisément que les contraintes liées à l'utilisation d'une couche de polyamide biréfringent et d'une couche de polyamide étiré, entraine des limitations tant dans l'accessibilité du choix des matériaux constitutifs du film polarisant, que dans ses conditions de mise en oeuvre, ainsi que dans les propriétés et les performances des lentilles polarisantes ainsi obtenues.

Enfin, le procédé selon l'invention présente un autre avantage supplémentaire, c'est qu'il peut être réalisé par simple mise en contact des moules sans avoir besoin de vide ou de dépressurisions comme c'est le cas des procédés connus, réalisés par des machines par exemple de type LEMA en Italie. Ainsi, le temps de cycle pour la fabrication de lentilles polarisantes peut être diminué, permettant ainsi de réduire davantage les coûts de fabrication.

L'invention a donc aussi pour objet d'apporter une nouvelle alternative dans la fabrication de lentille polarisante.

Le procédé de fabrication selon l'invention comprend les étapes de :
- préchauffer un film laminé comportant une couche externe de triacétate de cellulose (TAC), une couche intermédiaire d'alcool polyvinylique (PVA) et une couche externe de polyamide avec des températures différentes pour les couches externes du film,
- thermoformer ledit film préchauffé en effectuant un chauffage différencié des couches externes,
- disposer le film thermoformé dans un moule à la forme de la lentille de telle manière que la couche externe de triacétate de cellulose s'étende contre une paroi du moule,
- injecter dans le moule du polyamide de telle manière que la couche de polyamide fusionne avec le polyamide injecté pour former la couche de support mécanique de la lentille,
- démouler la lentille ainsi formée.

Le chauffage différencié du film permet de réaliser un thermoformage adapté à l'hétérogénéité des matériaux constituant les couches externes du film.

La différence de température est telle que la partie convexe du moule, c'est-à-dire la partie concave de la lentille est chauffée plus que la partie concave du moule (partie convexe de la lentille). La différence de température est comprise entre 10°C et 15°C.

D'autres caractéristiques et avantages de l'invention ressortiront à la lecture de la description qui suit d'un mode de réalisation particulier non limitatif de l'invention.

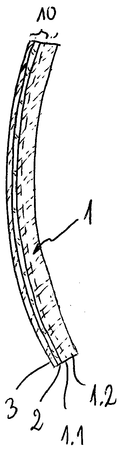

Il sera fait référence à la figure unique annexée représentant en coupe transversale une lentille conforme à l'invention.

L'invention concerne une lentille polarisante correctrice ou non correctrice comportant, successivement, une couche de support mécanique 1 en polyamide, notamment du nylon, une couche intermédiaire 2 en alcool polyvinylique (PVA) et une couche externe 3 en triacétate (TAC) de cellulose. Les couches adhésives éventuellement nécessaires pour maintenir une cohésion des couches ne sont pas mentionnées. L'invention concerne préférentiellement une lentille polarisante non correctrice.

La couche de support mécanique 1 forme la face arrière de la lentille et est agencée pour donner à la lentille ses propriétés mécaniques et notamment sa rigidité. L'épaisseur de la couche de support mécanique est ainsi définie en fonction de la rigidité et de la résistance mécanique recherchées. Elle est également définie en accord avec les propriétés optiques de la lentille.

La couche externe 3 forme la face avant de la lentille.

La face arrière et la face avant de la lentille peuvent éventuellement être recouvertes par tous revêtements usuellement utilisés dans le domaine des lentilles ophtalmiques pour apporter à la lentille polarisante une fonction complémentaire. Parmi les revêtements fonctionnels peuvent être disposés sur l'une et /ou l'autre face de la lentille, on peut citer à titre non limitatif les revêtements permettant de conférer en plus à la lentille une fonction antichoc, une fonction antireflet, une fonction anti-abrasion, une fonction antisalissure, une fonction antibuée, une fonction antistatique ou une combinaison de certaines de ces fonctions.

Le procédé comprend l'étape de prendre un film laminé 10 comportant la couche externe de triacétate de cellulose 3, la couche intermédiaire d'alcool polyvinylique 2 et une couche externe de polyamide 1.1, notamment du nylon.

Le film 10 est ensuite découpé selon un contour correspondant à celui de la lentille.

Le film 10 découpé est ensuite bombé. Cette opération est réalisée par thermoformage.

Le thermoformage est précédé d'un séchage qui permet d'améliorer le comportement du film lors du thermoformage et de stabiliser les couleurs du film 10.

Après le séchage est réalisé un préchauffage du film 10 visant à faciliter le thermoformage. Lors du préchauffage, les couches externes sont chauffées à des températures différentes. La différence de température pour le préchauffage est inférieure ou égale à 15°C, la température côté tri-acétate de cellulose (TAC) étant inférieure à celle du côté polyamide.

Le thermoformage proprement dit est réalisé dans un moule comportant une partie concave et une partie convexe. Le film 10 est disposé dans le moule dont les parties concave et convexe, en contact chacune avec une des couches externes, sont chauffées à des températures différentes. La partie convexe du moule est chauffée à une température supérieure à celle de la partie concave du moule. La différence de température est inférieure ou égal à 15°C.

La déformation du film 10 résulte de l'application, en présence de chaleur, d'une pression par les parties de moule, la pression finale pouvant atteindre entre 40 et 60t si on réalise douze lentilles à la fois.

D'une façon avantageuse, dans ce procédé de thermoformage, la pression exercée pour permettre la déformation du film est exercée de façon progressive et contrôlée. Cette application contrôlée de la pression par la mise en oeuvre de moyens adaptés au sein du moule permet de contrôler la déformation.

Les températures de chauffage tiennent compte des températures de transition vitreuse des matériaux des couches externes et sont notamment ajustées en fonction de ce paramètre physique.

Le procédé se poursuit par l'étape de disposer le film 10 thermoformé dans un moule d'injection à la forme de la lentille.

Dans un mode alternatif du procédé, une étape de séchage du film thermoformé peut être mise en oeuvre préalablement à l'étape où le film thermoformé est disposé dans le moule d'injection, notamment dans le cas où le film n'est pas immédiatement utilisé après l'étape de thermoformage.

Le film 10 bombé est disposé dans le moule d'injection de telle manière que la couche externe de triacétate de cellulose 3 s'étende contre une paroi du moule formée par la partie concave du moule tandis qu'un espace demeure entre la couche externe 1.1 et la paroi du moule en regard formée par la partie convexe du moule.

Il est ensuite procédé à une injection de polyamide, en particulier du nylon dans ledit espace du moule de telle manière que la couche externe 1.1 de polyamide fusionne avec le polyamide injecté 1.2 pour former la couche de support mécanique 1 de la lentille. On notera sur la figure que la couche externe de polyamide 1.1 est séparée du polyamide injecté 1.2 par un trait pointillé aux fins d'expliquer le procédé de réalisation de l'invention. En réalité, sur la lentille terminée n'apparaît normalement qu'une couche de polyamide car la couche externe 1.1 de polyamide du film 10 fusionne avec le polyamide injecté 1.2 pour former une couche unique. Les paramètres de l'opération d'injection, et plus particulièrement la température du polyamide injecté, la vitesse et/ou la pression d'injection, la position du ou des points d'injection, sont déterminées de manière spécifique et liées à la nature du film polarisant utilisé dans le procédé.

Une fois le polyamide suffisamment refroidi, il est procédé au démoulage de la lentille ainsi formée.

Bien entendu, l'invention n'est pas limitée aux modes de réalisation décrits mais englobe toute variante entrant dans le champ de l'invention telle que définie par les revendications.

En particulier, la lentille peut comporter une portion correctrice. La lentille peut avoir sa forme définitive ou bien être de forme circulaire. Dans ce dernier cas, c'est à l'opticien d'usiner la lentille (généralement par fraisage) pour lui donner une forme adaptée à la monture à laquelle elle est destinée.

L'invention est applicable aux lunettes de type classique comportant deux lentilles mais également aux lunettes de type masque comportant une lentille unique.

## Revendications

1. Procédé de réalisation d'une lentille, comprenant les étapes de :
- préchauffer un film laminé (10) comportant une couche externe de triacétate de cellulose (TAC), une couche intermédiaire d'alcool polyvinylique (PVA) et une couche externe de polyamide avec des températures différentes pour les couches externes du film,
- thermoformer ledit film préchauffé en effectuant un chauffage différencié des couches externes,
- disposer le film thermoformé dans un moule à la forme de la lentille de telle manière que la couche externe de triacétate de cellulose s'étende contre une paroi du moule,
- injecter dans le moule du polyamide de telle manière que la couche de polyamide fusionne avec le polyamide injecté pour former la couche de support mécanique de la lentille,
- démouler la lentille ainsi formée.

2. Procédé selon la revendication 1, dans lequel le préchauffage est précédé d'un séchage du film.

3. Procédé selon la revendication 1, dans lequel le thermoformage est réalisé dans un moule comportant une pièce convexe et une pièce concave.

4. Procédé selon la revendication 3, dans lequel, pendant le thermoformage, la partie convexe et la partie concave du moule sont chauffées à des températures différentes.

5. Procédé selon la revendication 4, dans lequel la partie convexe du moule est chauffée à une température supérieure à celle de la partie concave du moule.

6. Procédé selon la revendication 4 ou 5, dans lequel la différence de température est inférieure ou égale à 15°C.

7. Procédé selon l'une quelconque des revendications 1 ou 6, dans lequel la différence de température lors de l'étape de préchauffage est inférieure ou égal à 15°C.

8. Procédé selon l'une quelconque des revendications 1 à 7, dans lequel la déformation du film pendant l'étape de thermoformage est réalisée par application d'une pression contrôlée.

9. Procédé selon l'une quelconque des revendications 1 à 8, dans lequel le polyamide est du nylon.

10. Lentille polarisante obtenue par le procédé selon l'une quelconque des revendications précédentes, comportant, successivement, une couche de support mécanique comprenant du polyamide formant une face arrière de la lentille, une couche intermédiaire d'alcool polyvinylique, et une couche externe en triacétate de cellulose formant une face avant de la lentille.

11. Lentille polarisante selon la revendication 10, qui est une lentille polarisante correctrice.

12. Lentille polarisante selon la revendication 10, qui est une lentille polarisante non correctrice.

## Patentansprüche

1. Verfahren zur Herstellung einer Linse, das die folgenden Schritte umfasst:
- Vorerhitzen einer laminierten Folie (10), die eine äußere Schicht aus Cellulosetriacetat (CTA), eine Zwischenschicht aus Polyvinylalkohol (PVA) und eine äußere Schicht aus Polyamid umfasst, bei unterschiedlichen Temperaturen für die äußeren Schichten der Folie,
- Warmumformen der vorerhitzten Folie unter Durchführung einer unterschiedlichen Erhitzung der äußeren Schichten,
- Einlegen der warmumgeformten Folie in eine Form mit der Gestalt der Linse derart, dass die äußere Schicht aus Cellulosetriacetat anliegend an eine Wand der Form verläuft,
- Einspritzen von Polyamid in die Form derart, dass die Polyamidschicht mit dem eingespritzten Polyamid unter Bildung der mechanischen Trägerschicht der Linse verschmilzt,
- Entnehmen der so geformten Linse aus der Form.

2. Verfahren nach Anspruch 1, wobei dem Vorerhitzen eine Trocknung der Folie vorausgeht.

3. Verfahren nach Anspruch 1, wobei das Warmumformen in einer Form durchgeführt wird, die einen konvexen Teil und einen konkaven Teil umfasst.

4. Verfahren nach Anspruch 3, wobei während des Warmumformens der konvexe Teil und der konkave Teil der Form auf unterschiedliche Temperaturen erhitzt werden.

5. Verfahren nach Anspruch 4, wobei der konvexe Teil der Form auf eine höhere Temperatur als diejenige des konkaven Teils der Form erhitzt wird.

6. Verfahren nach Anspruch 4 oder 5, wobei der Temperaturunterschied kleiner oder gleich 15°C ist.

7. Verfahren nach einem der Ansprüche 1 oder 6, wobei der Temperaturunterschied während des Vorerhitzungsschritts kleiner oder gleich 15°C ist.

8. Verfahren nach einem der Ansprüche 1 bis 7, wobei die Verformung der Folie während des Warmumformschritts durch Anlegen eines kontrollierten Drucks erreicht wird.

9. Verfahren nach einem der Ansprüche 1 bis 8, wobei es sich bei dem Polyamid um Nylon handelt.

10. Polarisierende Linse, die durch das Verfahren nach einem der vorhergehenden Ansprüche erhalten wird, die nacheinander eine Polyamid umfassende mechanische Trägerschicht, die eine Rückseite der Linse bildet, eine Zwischenschicht aus Polyvinylalkohol und eine äußere Schicht aus Cellulosetriacetat, die eine Vorderseite der Linse bildet, umfasst.

11. Polarisierende Linse nach Anspruch 10, bei der es sich um eine polarisierende Korrekturlinse handelt.

12. Polarisierende Linse nach Anspruch 10, bei der es sich um eine polarisierende, nicht korrigierende Linse handelt.

## Claims

1. A process for producing a lens, comprising the steps of:
- preheating a laminated film (10) comprising an outer layer of cellulose triacetate (CTA), an intermediate layer of polyvinyl alcohol (PVA) and an outer layer of polyamide with different temperatures for the outer layers of the film,
- thermoforming said preheated film by carrying out a differentiated heating of the outer layers,
- placing the thermoformed film in a lens-shaped mold so that the outer layer of cellulose triacetate extends against one wall of the mold,
- injecting polyamide into the mold so that the polyamide layer merges with the injected polyamide in order to form the mechanical support layer of the lens,
- removing the lens thus formed from the mold.

2. The process as claimed in claim 1, wherein the preheating is preceded by a drying of the film.

3. The process as claimed in claim 1, wherein the thermoforming is carried out in a mold comprising a convex part and a concave part.

4. The process as claimed in claim 3, wherein, during the thermoforming, the convex part and the concave part of the mold are heated at different temperatures.

5. The process as claimed in claim 4, wherein the convex part of the mold is heated at a temperature higher than that of the concave part of the mold.

6. The process as claimed in claim 4 or 5, wherein the temperature difference is less than or equal to 15°C.

7. The process as claimed in either one of claims 1 and 6, wherein the temperature difference during the preheating step is less than or equal to 15°C.

8. The process as claimed in any one of claims 1 to 7, wherein the deformation of the film during the thermoforming step is carried out by application of a controlled pressure.

9. The process as claimed in any one of claims 1 to 8, wherein the polyamide is nylon.

10. A polarizing lens obtained by the process as claimed in any one of the preceding claims, comprising, successively, a mechanical support layer comprising polyamide that forms a rear face of the lens, an intermediate layer of polyvinyl alcohol, and an outer layer made of cellulose triacetate that forms a front face of the lens.

11. The polarizing lens as claimed in claim 10, which is a corrective polarizing lens.

12. The polarizing lens as claimed in claim 10, which is a non-corrective polarizing lens.
